# EUROPÄISCHE PATENTANMELDUNG

(11) **EP 1 584 993 A1**
(43) Veröffentlichungstag der Anmeldung: **12.10.2005**
(21) Anmeldenummer: 05003807.4
(22) Anmeldetag: 23.02.2005
(51) Int. Cl.: G03H 1/22, G03H 1/00

(54) **Verfahren zur Fokusdetektion in der Hologramm-Tomographie**

(30) Priorität: 27.02.2004 DE 102004010091
(71) Anmelder: Stiftung Caesar Center of Advanced European Studies and Research, 53175 Bonn (DE)
(72) Erfinder: Thelen, Andrea, 53111 Bonn (DE); Giel, Dominik, 53111 Bonn (DE); Hering, Peter, Prof. Dr., 40591 Düsseldorf (DE); Frey, Susanne, 53113 Bonn (DE); Bongartz, Jens, Prof. Dr., 41466 Neuss (DE)
(74) Vertreter: Braun-Dullaeus, Karl-Ulrich

(57) **Zusammenfassung**

Verfahren zur Aufbereitung gespeicherter Bilddaten, die als Satz von Schnittebenen 9 durch ein dreidimensionales Bild 5 eines ausgedehnten Objektes vorliegen, wobei in einer Schnittebene 9 eine Anzahl fokussierter Bildpunkte liegen, die eine Kontur des Objektes repräsentieren, wobei die Oberfläche des Objektes aus der Summe der in den Schnittebenen 9 vorhandenen Kontur erzeugt wird, wobei die in den Schnittebenen 9 liegenden Bildpunkte durch Optimierung eines Schärfemaßes von Bildbestandteilen detektiert werden, die in aufeinanderfolgenden Schnittebenen liegen, wobei in einem Initialisierungsschritt die Optimierung entlang der optischen Achse 11 der Abbildung durchgeführt wird, wobei in diesem Schritt ein Fokus bestimmt wird, wobei nach Auffinden des Fokus in einem folgenden Iterationsschritt eine Optimierung entlang einer Achse 12 durchgeführt wird, die durch den Fokus hindurchführt und die geneigt ist gegen die Senkrechte auf der Fläche, von der die optische Abbildung ausgeht, und wobei das Optimum als neuer Fokus gespeichert wird.

## Beschreibung

Die vorliegende Erfindung betrifft ein Verfahren zur Aufbereitung gespeicherter Bilddaten, die als Satz von Schnittebenen durch ein dreidimensionales Bild eines ausgedehnten Objektes vorliegen, wobei in einer Schnittebene eine Anzahl fokussierter Bildpunkte liegen, die eine Kontur des Objektes repräsentieren, wobei die Oberfläche des Objektes aus der Summe der in den Schnittebenen vorhandenen Kontur erzeugt wird, wobei die in den Schnittebenen liegenden Bildpunkte durch Optimierung eines Schärfemaßes von Bildbestandteilen detektiert werden, die in aufeinanderfolgenden Schnittebenen liegen.

Derartige Verfahren sind bekannt und werden beispielsweise bei der Aufnahme und der Speicherung der reellen Bilder eingesetzt, die aus holographischen Aufnahmen gewonnen werden. Dabei entsteht das dreidimensionale reelle Bild in Form eines Lichtwellenfeldes bei der holographischen Aufzeichnung eines Objekts durch optische Rekonstruktion des Hologramms mit dem phasenkonjugierten Referenzstrahl. Von dem Bild können an unterschiedlichen axialen Positionen zweidimensionale Schnittbilder digital aufgezeichnet werden. Dazu wird bekanntermaßen ein in den Raum projiziertes Hologramm beispielsweise auf einem Streuschirm abgebildet und dann von einer Digitalkamera aufgenommen.

Die vom Streuschirm "abgelesenen" Bildpunkte liegen in einer Schnittebene durch das dreidimensionale reelle Bild und werden in der Bilddatei als ein Datensatz gespeichert, der eine x/y-Ebene repräsentiert. Das nächste Schnittbild wird nach der Verschiebung des Streuschirmes entlang der in z-Richtung verlaufenden optischen Achse auf dieselbe Weise aufgenommen. Eine andere Anwendung dieser Technik liegt in der Mikroskopie dreidimensionaler Gegenstände, wo eine Fokalebene aufgenommen und gespeichert wird, bevor der Fokus auf eine nächste Ebene gerichtet wird. In den Schnittebenen bilden die Bildpunkte der in die Fokalebene abgebildeten Objektpunkte eine scharfe Kontur. Aus der Summe der Konturen lässt sich wiederum das Objekt rekonstruieren.

In diesen Fällen kann die optische Abbildung eines einzelnen Punktes durch die sogenannte Punktabbildungsfunktion beschrieben werden, die als doppelter Lichtkegel visualisierbar ist, wobei der doppelte Lichtkegel von dem abbildenden Element, beispielsweise einem Hologramm, ausgehend zum Fokus hin konvergiert und anschließend wieder divergiert. Innerhalb dieses Kegels formiert sich das Bild des entsprechenden Bildpunktes.

Problematisch bei derartigen Verfahren ist jedoch, die scharfen (fokussierten) Bildpunkte aus der Menge der in einer Schnittebene liegenden unscharfen (unfokussierten) Bildpunkte herauszufiltern, um zu einer guten Rekonstruktion des Objektes zu gelangen. Fokussierte Bildpunkte stammen von Objektpunkten mit einem bestimmten Objektabstand, so dass eine Unterscheidung von fokussierten und unfokussierten Bildpunkten eine Objektvermessung ermöglicht. Zur einer solchen Objektvermessung, die beispielsweise in der Medizin eine erhebliche Bedeutung hat, werden aus einem Satz von Abbildungen mit unterschiedlichen Fokusebenen die jeweils fokussierten Bildpunkte detektiert und rechnerisch zu einem 3D-Volumen zusammengefügt. Zur Bestimmung der Foki aus dem Satz der Abbildungen mit unterschiedlicher Fokusebene wird in der Regel ein Schärfemaß, beispielsweise die Grauwertvarianz in einer festgelegten Umgebung eines jeden Punktes, optimiert. Anschließend wird für jeden lateralen Punkt (x,y) dasjenige Schnittbild bestimmt, in welchem das definierte Schärfemaß maximal ist. So wird jedem lateralen Punkt eine axiale Koordinate zugeordnet, woraus sich ein dreidimensionales Modell des abgebildeten Objekts ableiten lässt. Da die laterale Koordinate bei der Maximierung konstant gehalten wird und die Schnittbilder meist senkrecht zur optischen Achse aufgenommen werden, findet die Bestimmung des Maximalwertes parallel zur optischen Achse statt. Diese Maximalwertbestimmung auf der Grundlage der Bilddatei wird von einem Computer durchgeführt.

Da insbesondere für Bildpunkte, die sich weiter entfernt von der optischen Achse befinden, die Achse der Punktabbildungsfunktion nicht parallel zur optischen Achse ist, führt die genannte Schärfemaßmaximierung entlang der optischen Achse allerdings für solche Punkte nicht zur Erfassung der tatsächlichen Fokuspositionen.

Aufgabe der Erfindung ist es nunmehr, ein Verfahren zu schaffen, das sich kostengünstig mit einfachen Mitteln umsetzen lässt, das verhältnismäßig geringe Rechenkapazität bindet und das auch für entfernt von der optischen Achse gelegene Bildpunkte eine korrekte Detektion der Foki erlaubt. Zudem ist es Aufgabe der Erfindung, eine Vorrichtung zur Umsetzung des Verfahrens zu schaffen.

Diese Aufgaben werden gelöst durch das Verfahren mit den kennzeichnenden Merkmalen des Anspruch 1 und die Vorrichtung nach Anspruch 14.

Ein wesentlicher Grundgedanke der Erfindung ist darin zu sehen, dass in einem ersten Initialisierungsschritt zunächst eine Schärfemaßmaximierung entlang der z-Koordinate verlaufenden optischen Achse des Bildpunktes nach dem bekannten Verfahren durchgeführt wird. Damit wird ein Fokus (ersten Grades) bestimmt. Insbesondere nach der Bearbeitung mit speziellen Filtern, u.a. beispielsweise mit einem Medianfilter, liefert die Durchführung dieses ersten Schrittes eine Näherung für die abgebildete Oberfläche. Wie im Stand der Technik bekannt, wird also im ersten Iterationsschritt eine Bestimmung der Fokuspunkte parallel zur optischen Achse durchgeführt.

Das erfindungsgemäße Verfahren führt nun eine weitere Schärfemaßmaximierung entlang einer Achse durch, die sich an die Achse der Punktabbildungsfunktion annähert. Dazu wird nach dem Initialisierungsschritt von dem detektierten Fokus ausgehend eine Achse definiert, die gegenüber der optischen Achse in Richtung des Schwerpunktes der Fläche, von der die optische Abbildung ausgeht, geneigt ist. Besonders vorteilhaft ist es allerdings, wenn die Achse einerseits durch den Fokus (ersten Grades) und andererseits unmittelbar durch den Schwerpunkt der Fläche hindurchläuft, von der die optische Abbildung ausgeht, wobei dieser gegebenenfalls zunächst zu bestimmen ist. Der Schwerpunkt liegt beispielsweise in dem Teil des Hologramms, der bei einer Aufnahme von dem Streulicht des entsprechenden Punktes und dem Referenzstrahl getroffen wurde und der ebenfalls bei der Rekonstruktion ausgeleuchtet wurde. Erfindungsgemäß wird dann in einem nachfolgenden Iterationsschritt eine Schärfemaßmaximierung entlang dieser gegen die optische Achse geneigten Achse durchgeführt. Das in diesem Iterationsschritt gefundene Optimum wird als neuer Fokus (nächsten Grades) gespeichert.

Da der nach dem ersten Iterationsschritt gefundene Fokus zwar besser aber noch nicht optimal ist, wird in einer bevorzugten Ausführungsform des Verfahrens der Iterationsschritt auf der Basis des jeweils zuletzt gefundenen Fokus zumindest noch einmal wiederholt, wobei eine mehrfache Wiederholung der Schritte das Ergebnis weiterhin verbessert. Die Wiederholung kann dann abgebrochen werden, wenn keine signifikante Veränderung der Maximalposition des Schärfemaßes von Schritt zu Schritt mehr zu beobachten ist. Dies ist in Praxis etwa nach zehn Iterationsschritten der Fall.

In anderen Worten ausgedrückt beruht die Erfindung auf der Idee, iterativ durch Schärfemaßmaximierung die Objektoberfläche zu bestimmen. Dabei werden für jeden Punkt individuell Parameter der Punktabbildungsfunktion bestimmt, wobei die gewonnenen Kenntnisse in der Schärfemaßmaximierung des nächsten Iterationsschritts berücksichtigt werden. Damit wird vermieden, dass, wie bislang üblich, die Schärfewerte nur entlang der z-Richtung miteinander verglichen werden. Statt des Vergleiches der Bildschärfe unterschiedlicher Objektpunkte nährt sich das erfindungsgemäße Verfahren an eine Optimierung durch einen Vergleich der Bildschärfe ein und desselben Objektpunktes in verschiedenen Ebenen an. So werden fehlerhafte Zuordnungen vermieden, die bei bekannten Verfahren daraus resultieren, dass verschiedene Objektpunkte intrinsisch einen sehr unterschiedlichen Kontrast aufweisen können.

Das erfindungsgemäße Verfahren ist insofern besonders vorteilhaft, als es zu guten Ergebnissen führt, obwohl Lage und Form der Punktabbildungsfunktion die im vorhinein nicht bekannt und daher bestimmt werden soll, von der Topographie des Objektes abhängen. Durch das Verfahren werden einerseits Parameter der Punktabbildungsfunktion iterativ und für jeden Objektpunkt individuell bestimmt und andererseits die Fokusposition entlang ihrer Achse durch Maximierung eines Schärfemaßes ermittelt.

Das Verfahren trägt zu einer erheblichen Steigerung der Bildqualität bei, so dass eine Vermessung des Objektes anhand seines Bildes zu besseren Ergebnissen führt. Aus diesem Grund ist die Medizin ein bevorzugtes Einsatzgebiet der "Hologramm Tomographie", wo Körper beispielsweise präoperativ anhand der Bilder vermessen und Eingriffe geplant werden.

Ein weiterer wesentlicher Gedanke im Rahmen der Erfindung liegt darin, statt der Anordnung mit verschieblicher Streuscheibe und CCD Kamera zur Aufnahme der Schnittbilder einfach einen handelsüblichen Scanner beziehungsweise die in einem solchen Scanner eingesetzte Bildlesevorrichtung, insbesondere die CMOS-Zeile zu nutzen, um die Intensitätsverteilung im reellen Bild eines Hologramms aufzunehmen und in digitale Werte umzusetzen. Dazu wird die Bildlesevorrichtung so orientiert, dass der Scanner-Schlitten vertikal durch das reelle Bild fährt. Wie der Streuschirm wird auch die Bildlesevorrichtung auf einer Schiene montiert, auf der sie kontrolliert verschiebbar ist. Dieses einfache Aufnahmeverfahren zeichnet sich vor allem durch seine äußerst geringen Kosten gegenüber den bekannten Vorrichtungen aus. Zudem entsteht bei der Scanner-Detektion deutlich weniger Bildrauschen und der nachteilige Einfluss der Abstrahlcharakteristik der Streuscheibe unterbleibt. Auch wenn das beschriebene Verfahren zur Fokusdetektion zu besonders guten Ergebnissen führt, wenn die Bilddaten mit einer solchen Scannermimik aufgenommen wurden, so ist die Idee dieses "Missbrauchs" eines einfachen Scanners respektive einer für derartige Scanner geeigneten Bildlesevorrichtung an sich unabhängig von dem Verfahren zur Fokusdetektion.

Nachfolgend wird das Verfahren anhand der Figuren 1 bis 7 näher erklärt. Es zeigen:
- **Figur 1**: einen Aufbau zur Rekonstruktion eines reellen Bildes,
- **Figur 2**: eine Darstellung der richtungsabhängigen iterativen Auswertung,
- **Figur 3**: eine schematische Darstellung des Bildvolumens,
- **Figur 4**: eine weitere Darstellung der iterativen Auswertung,
- **Figur 5**: einen Lichtkegel eines Bildpunktes,
- **Figur 6**: die Bildformierung entlang der Ausbreitungsgeraden und
- **Figur 7**: ein Schaubild der richtungsabhängigen iterativen Auswertung.

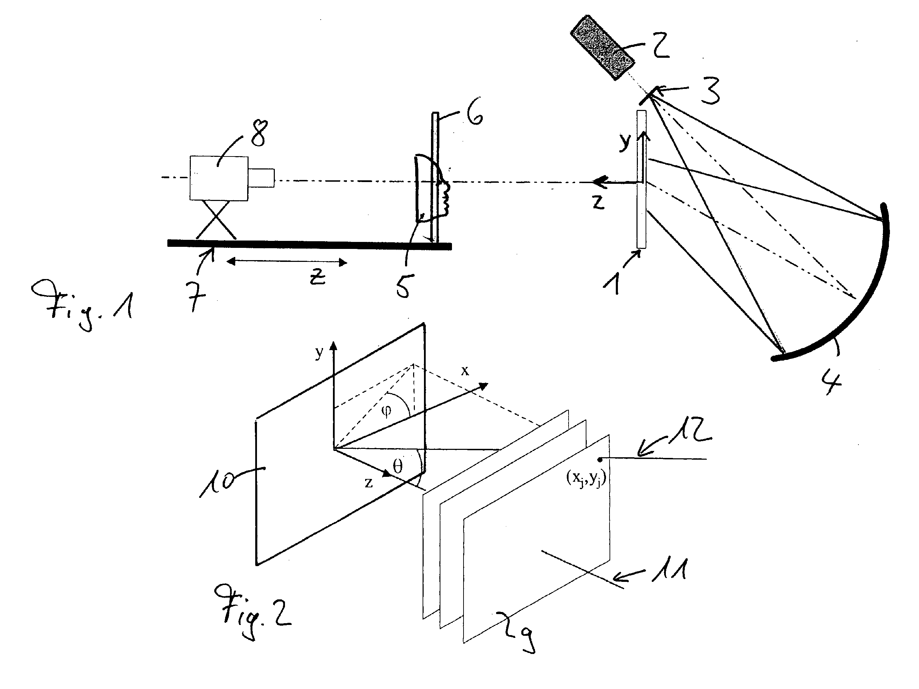

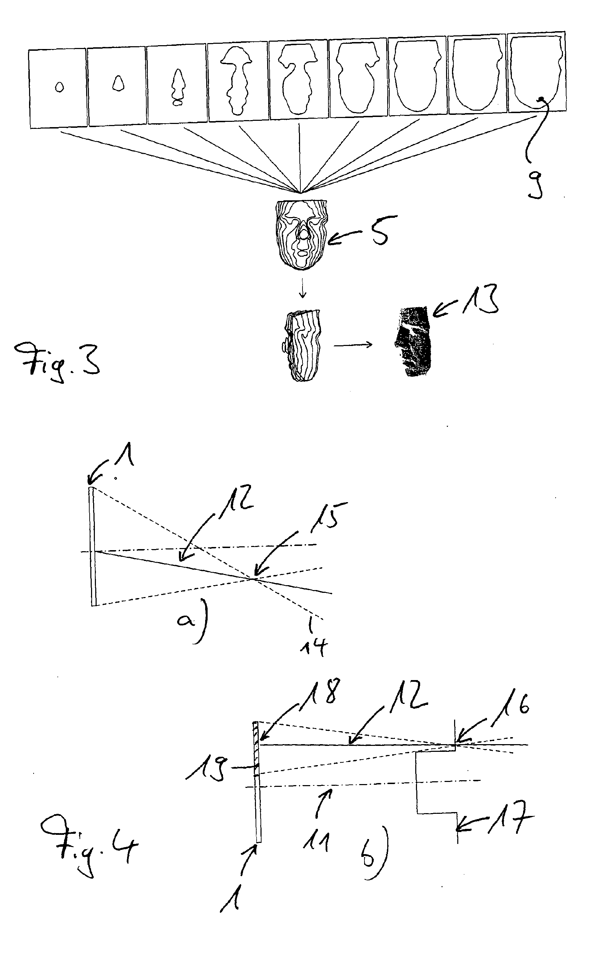

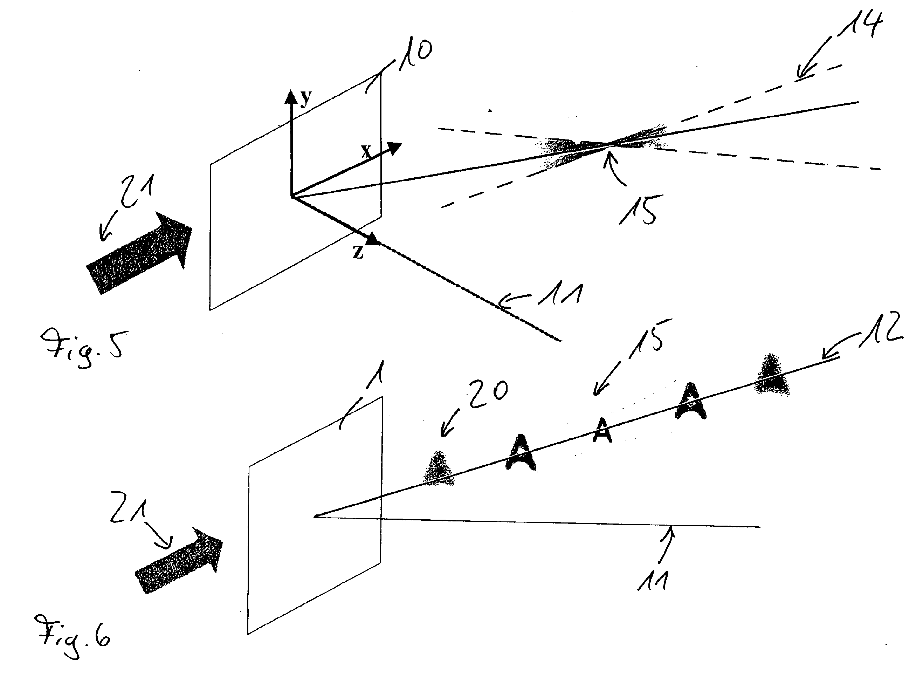

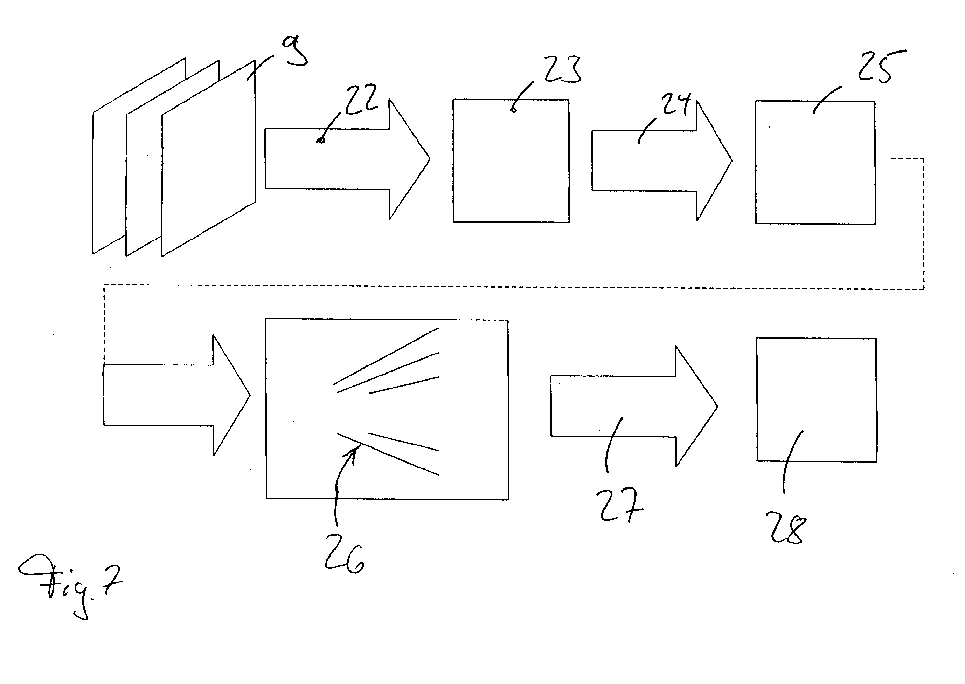

Figur 1 zeigt zunächst einen Aufbau zur Rekonstruktion eines reellen Bildes, wobei die Information über das Objekt in einem Hologramm 1 gespeichert ist. Zur Rekonstruktion wird das Hologramm 1 mit dem Licht eines Lasers 2 beleuchtet, wobei der Laserstrahl durch eine Streulinse 3 aufgestreut und dann von einem Hohlspiegel 4 auf das Hologramm 1 gelenkt wird. Das Hologramm 1 definiert mit seiner Fläche eine x-y Ebene, wobei die Senkrechte in z-Richtung liegt. Das reelle Bild 5 ist in diesem Fall ein Gesicht, das dreidimensional im Raum steht. Durch dieses Bild hindurch wird eine Streuscheibe 6 auf dem Verschiebetisch 7 in z-Richtung verschoben, auf der die einzelnen Schnittebenen durch das reelle Bild des Gesichtes 5 sichtbar werden. Das Bild auf der Streuscheibe 6 wird mit der Kamera 7 aufgenommen und als Datensatz, der ein Schnittbild repräsentiert, in einer Bilddatei gespeichert.

Das in Schnittbildern repräsentierte Bildvolumen ist nach Figur 2 durch einzelne hintereinander liegende Schnittbilder 9 in der Bilddatei niedergelegt. Ein Bildpunkt wird durch seine Koordinaten (xᵢ, yᵢ) in der i-ten Ebene beschrieben. Ausgehend von der Hologrammplatte 10 ist zunächst die optische Achse 11 definiert, die in z-Richtung verläuft. Zudem lässt sich eine Ausbreitungsgrade 12 als Achse der Punktabbildungsfunktion bestimmen, die einerseits durch den Schwerpunkt des Hologramms 10 und andererseits durch den Fokus des Bildpunktes (xᵢ, yᵢ) verläuft.

Wären die Schnittbilder des Bildes des Gesichtes 5 aus Figur 1 überlagerungsfrei, d.h. wäre in einem Schnittbild lediglich die von den Foki gebildete Kontur des Gesichtes und nicht die unscharfen Repräsentationen der Foki aus anderen Ebenen gespeichert, dann ließen sich die Schnittbilder 9 per Computer einfach zu einem Modell 13 des Gesichtes zusammenfügen. Um jedoch die scharfen von den unscharfen Punkten zu trennen bedarf es des erfindungsgemäßen Verfahrens.

Wie dargelegt, wird im ersten Iterationsschritt eine Bestimmung der Fokuspunkte parallel zur optischen Achse durchgeführt. Nach der Bearbeitung, beispielsweise mit einem Medianfilter, liefert dieser Schritt die abgebildete Oberfläche in erster Näherung. Ausgehend von dieser Näherung wird nachfolgend die Achse 12 der Punktabbildungsfunktion bestimmt, die eine Art Doppelkegel 14 (Figur 5) darstellt. Um diese Achse (Ausbreitungsgerade 12) zu bestimmen ist die Kenntnis von zwei Punkten notwendig. Der eine ist die Kegelspitze 15, die durch die im ersten Iterationsschritt bestimmte Fokusposition angenähert werden kann. Der zweite Punkt ist der Schwerpunkt derjenigen Fläche, von der die optische Abbildung ausgeht. Im Falle der hier vorliegenden holographischen Abbildung wird diese gebildet von demjenigen Teil des Hologramms 1, der bei Aufnahme von dem Streulicht des entsprechenden Punktes und dem Referenzstrahl getroffen und ebenfalls bei der Rekonstruktion ausgeleuchtet wurde. Betreffend den Punkt 16 der Kontur 17 nach Figur 4b liegt der Schwerpunkt 18 im oberen Teil des Hologramms. In Figur 4b ist zu erkennen, dass Streulicht von den Randbereichen des Objekts 17 häufig von anderen Objektbereichen abgeschattet wird, so dass zur Bestimmung des Schwerpunktes der jeweiligen Fläche 10 nicht die gesamte Hologrammfläche 1 heranzuziehen ist.

Um diese Teilfläche zu bestimmen werden eine feste Anzahl von Randpunkten des Hologramms so lange auf der Hologrammfläche verschoben, bis die Verbindung mit dem jeweiligen betrachteten Fokuspunkt keinen Schnittpunkt mit der Objektoberfläche mehr aufweist. Die Verschiebung findet dabei entlang der Projektion der Verbindungslinie des Randpunktes und des Schnittpunktes mit der Objektoberfläche statt. Die verschobenen Randpunkte begrenzen eine Fläche deren Schwerpunkt den gesuchten zweiten Punkt darstellt.

Entlang der so ermittelten Achse 12 der Punktabbildungsfunktion wird durch Schärfemaßmaximierung der neue Objektpunkt bestimmt. Werden diese Schritte für jede laterale Bildkoordinate durchgeführt, entsteht ein neues Modell für das Objekt, das wiederum Ausgangspunkt für eine weitere Iteration sein kann. Das Verfahren wird so lange wiederholt, bis keine merkliche Veränderung mehr auftritt. Alternativ kann die für jeden Objektpunkt bestimmte Punktabbildungsfunktion einem Dekonvolutionsalgorithmus zugeführt werden.

In diesem Zusammenhang wird auf die Diplomarbeit "Holographische Topometrie" von Andrea Thelen verwiesen, die an der Mathematisch Naturwissenschaftlichen Fakultät der Rheinischen Friedrich-Wilhelms-Universität Bonn einzusehen ist. Die Offenbarung dieser Diplomarbeit wird durch diesen Verweis explizit in den Text der Anmeldung aufgenommen.

Wie aus Figur 6 ersichtlich, formiert sich entlang der Ausbreitungsgeraden 12 erst ein unscharfes Bild 20 (hier des Buchstaben "A"), das im Fokus 15 scharf und danach wieder unscharf wird. Wie auch in Figur 5 wird die Hologrammplatte 1 mit einem Rekonstruktionsstrahl 21 bestrahlt.

In Figur 7 ist noch einmal die Iteration in einem Schaubild dargestellt. Ausgehend von einem in Schnittbildern 9 vorliegenden Bildvolumen wird zunächst in Schritt 22 eine "konventionelle" Auswertung durchgeführt, die zu einem Reliefbild 23 führt.

Dieses wird in einem Schritt 24 durch Filter geglättet, so dass ein "Startbild" 25 entsteht. Für jeden Punkt des Startbildes 25 werden die Ausbreitungsgeraden 26 bestimmt, bevor die richtungsabhängige Auswertung 27 ein zweites Reliefbild 28 erzeugt. Bei der richtungsabhängigen Auswertung 27 wird in einer definierten Umgebung die Varianz berechnet, bevor ein Index jₘₐₓ bestimmt wird, für den die Varianz maximal ist. Dem ausgänglichen Punkt des Startbildes 25 wird zⱼₘₐₓ als neuerliche z-Koordinate zugeordnet, bevor der Schritt wiederholt wird.

## Patentansprüche

1. Verfahren zur Aufbereitung gespeicherter Bilddaten, die als Satz von Schnittebenen (9) durch ein dreidimensionales Bild (5) eines ausgedehnten Objektes vorliegen, wobei in einer Schnittebene (9) eine Anzahl fokussierter Bildpunkte liegen, die eine Kontur des Objektes repräsentieren, wobei die Oberfläche des Objektes aus der Summe der in den Schnittebenen (9) vorhandenen Kontur erzeugt wird, wobei die in den Schnittebenen (9) liegenden Bildpunkte durch Optimierung eines Schärfemaßes von Bildbestandteilen detektiert werden, die in aufeinanderfolgenden Schnittebenen liegen,
**dadurch gekennzeichnet,**
**dass** in einem Initialisierungsschritt die Optimierung entlang der optischen Achse (11) der Abbildung durchgeführt wird, wobei in diesem Schritt ein Fokus bestimmt wird,
**dass** nach Auffinden des Fokus in einem folgenden Iterationsschritt eine Optimierung entlang einer Achse (12) durchgeführt wird, die durch den Fokus hindurchführt und die geneigt ist gegen die Senkrechte auf der Fläche, von der die optische Abbildung ausgeht, und
**dass** das Optimum als neuer Fokus gespeichert wird.

2. Verfahren nach Anspruch 1,
**dadurch gekennzeichnet,**
**dass** der Iterationsschritt wiederholt wird, insbesondere bis keine signifikante Veränderung der Maximalposition des Schärfemaßes von Schritt zu Schritt mehr zu beobachten ist.

3. Verfahren nach Anspruch 1 oder 2,
**dadurch gekennzeichnet,**
**dass** der Iterationsschritt entlang einer Achse (12) erfolgt, die einerseits durch den Fokus und andererseits durch den Schwerpunkt (18) der Fläche (19), von der die optische Abbildung ausgeht, hindurchläuft.

4. Verfahren nach einem der vorherigen Ansprüche,
**dadurch gekennzeichnet,**
**dass** die gespeicherten Bilddaten das reelle Bild eines Hologrammes repräsentieren, das in einer Vielzahl von senkrecht zur optischen Achse verlaufenden Schnittebenen (9) aufgenommen ist.

5. Verfahren nach einem der vorherigen Ansprüche,
**dadurch gekennzeichnet,**
**dass** der Schwerpunkt (12) der Fläche (19) bestimmt wird indem eine Zahl von Randpunkten des Hologramms auf der Hologrammfläche verschoben wird, bis die Verbindung mit dem Fokus keinen Schnittpunkt mit der Oberfläche des Objekts mehr aufweist.

6. Verfahren nach Anspruch 5,
**dadurch gekennzeichnet,**
**dass** die Verschiebung entlang der Projektion der Verbindungslinie des Randpunktes und des Schnittpunktes mit der Objektoberfläche stattfindet.

7. Verfahren nach einem der vorherigen Ansprüche,
**dadurch gekennzeichnet,**
**dass** die Foki einer vorgebbaren Vielzahl von Bildpunkten, insbesondere aller das Hologramm beschreibender Objektpunkte, optimiert werden.

8. Verfahren nach einem der vorherigen Ansprüche,
**dadurch gekennzeichnet,**
**dass** für jeden Bildpunkt Parameter der Punktabbildungsfunktion bestimmt und in die Fokusdetektion einbezogen werden.

9. Verfahren nach Anspruch 8,
**dadurch gekennzeichnet,**
**dass** die Richtung und ein angenährter Öffnungswinkel der Punktabbildungsfunktion ermittelt werden aus der im vorherigen Iterationsschritt bestimmten Fokusposition und der Teilfläche des abbildenden Elementes, die von diesem Punkt ausgehend erreicht
werden konnte.

10. Verfahren nach einem der vorherigen Ansprüche,
**dadurch gekennzeichnet,**
**dass** geeignete Frequenzfilter unterstützend eingesetzt werden.

11. Verfahren nach einem der vorherigen Ansprüche,
**dadurch gekennzeichnet,**
**dass** die iterativ ermittelte Punktabbildungsfunktion zur Dekonvolution des Bildvolumens eingesetzt wird.

12. Verfahren nach einem der vorherigen Ansprüche,
**dadurch gekennzeichnet,**
**dass** zur Aufnahme der Schnittbilder eine Bildlesevorrichtung, wie sie ein handelsüblicher Scanner aufweist, eingesetzt wird, wobei die Bildlesevorrichtung derart orientiert wird, das der Schlitten die Ebene eines Schnittbildes überstreicht.

13. Verfahren nach einem der vorherigen Ansprüche,
**dadurch gekennzeichnet,**
**dass** die Bildlesevorrichtung insbesondere entlang der optischen Achse (z) verschieblich gehalten ist.

14. Vorrichtung zur Durchführung des Verfahrens nach einem der vorherigen Ansprüche,
**gekennzeichnet durch**
eine Bildlesevorrichtung (6,8) zur Aufnahme der Schnittbilder (9),
einen Computer zum Speichern der von den Schnittbildern (9) gebildeten Bilddaten und zur Durchführung der Iterationsschritte zum Auffinden der Foki.
